# EUROPÄISCHE PATENTSCHRIFT

(11) **EP 0 948 170 B1**
(45) Veröffentlichungstag und Bekanntmachung des Hinweises auf die Patenterteilung: **08.10.2003**
(21) Anmeldenummer: 99105790.2
(22) Anmeldetag: 22.03.1999
(51) Int. Cl.: H04L 25/02, G06F 13/38

(54) **In einem Rechnersystem vorgesehene Schaltung zum Schutz von LVD(Low Voltage Differential)- SCSI(Small Computer System Interafce) -Einrichtungen**
Circuit provided in a computer system for the protection of LVD-SCSI devices
Cicuit dans un système d'ordinateur pour la protection des dispositifs SCSI à tension différentielle basse

(30) Priorität: 31.03.1998 DE 19814426
(43) Veröffentlichungstag der Anmeldung: 06.10.1999
(73) Patentinhaber: Fujitsu Siemens Computers GmbH, 81739 München (DE)
(72) Erfinder: Depta, Robert, 86179 Augsburg (DE)
(74) Vertreter: Epping, Wilhelm, Dipl.-Ing.

(56) Entgegenhaltungen:
- WO-A-91/14989
- WO-A-92/18934
- "ADAPTER. SMALL COMPUTER SYSTEM INTERFACE SINGLE ENDED TO DIFFERENTIAL" IBM TECHNICAL DISCLOSURE BULLETIN, IBM CORP. NEW YORK, US, Bd. 36, Nr. 11, 1. November 1993 (1993-11-01), Seiten 331-333, XP000424877 ISSN: 0018-8689

## Beschreibung

Die Erfindung betrifft eine in einem Rechnersystem vorgesehene Schaltung zum Schutz von LVD(Low Voltage Differential)-SCSI(Small Computer System Interface)-Einrichtungen, z.B. Geräten oder Controllern, vor zu hohen Signalspannungen, die von an einem gleichen symmetrischen LVD-SCSI-Bus angeschlossenen und aktivierten HVD-SCSI(High Voltage Differential)-Einrichtungen erzeugt werden.

Gemäß Stand der Technik offenbart WO 921 8934 die Verwendung eines Schutzkontrollgerätes zwischen einer SE (Single-Ended)-SCSI und einer HVD - Einrichtung.

In Rechnersystemen besteht die Möglichkeit, daß versehentlich HVD-SCSI-Einrichtungen, z.B. Treiber, am gleichen SCSI-Bus angeschlossen und aktiviert werden, an dem auch LVD-SCSI-Einrichtungen, z.B. Geräte oder Controller, betrieben werden. In der SCSI-Norm für LVD: SPI-2(X33T10/1142D, Rev.10) ist keine diesbezügliche Schutzmaßnahme vorgesehen. Bei einer zu hohen Signalspannungsansteuerung des SCSI-Bus können somit die angeschlossenen LVD-SCSI-Einrichtungen zerstört werden.

Bekannte, als integrierte Schaltungen (ICs) ausgeführte SCSI-Controller-Bausteine, die für LVD-Betrieb vorgesehen sind, werden beispielsweise mit einer Versorgungsspannung von 3,3 Volt gespeist. Zusätzlich ist für diese Bausteine spezifiziert, daß die maximal zulässige Spannung an den Signaleingängen die Versorgungsspannung nur um allerhöchstens 0,5 Volt überschreiten darf.

Laut der SCSI-3-Spezifikation müssen die Spannungspegel für HVD-SCSI-Signale konform zur Schnittstellennorm EIA RS-485 sein. Die Norm EIA RS-485 läßt Spannungspegel im Bereich zwischen -7 Volt und +12 Volt und zwar für Low-Impedance-Treiber zu. Infolgedessen sind die Bedingungen für das Auftreten von "Latch-up"-Effekten bei fast allen LVD-IC-Bausteinen bei einer falschen SCSI-Bus-Konfiguration vorprogrammiert.

Eine allerdings bislang noch nicht vorgesehene unterschiedliche Form der Steckverbindungen für HVD-SCSI- und LVD-SCSI-Busse bei gemischten Systemen würde ein einwandfreies und die LVD-Bausteine schützendes Anschließen erheblich erleichtern.

Herstellerfirmen von LVD-SCSI-Bausteinen sehen die Verantwortung für die Sicherung der LVD-Bausteine gegen Zerstörung am ehesten bei den Herstellern von HVD-SCSI-Einrichtungen (Festplatten, Umsetzer, Controller, Steckkarten oder dergleichen). Da die Lösung dieses Problems allerdings von der SCSI-Norm nicht vorgeschrieben und auch nicht vorgegeben wird, ist davon auszugehen, daß kein Hersteller von HVD-SCSI-Einrichtungen freiwillig Schutzmaßnahmen für LVD-SCSI-IC-Bausteine einbauen wird, ganz abgesehen davon, daß bei bereits fertig vorliegenden HVD-SCSI-Einrichtungen die Einfügung einer diesbezüglichen Schutzmaßnahme sowieso nicht mehr möglich ist.

Aufgabe der Erfindung ist es, für Rechnersysteme eine Schutzmaßnahme für LVD-SCSI-Einrichtungen anzugeben, durch welche sicher ausgeschlossen wird, daß bei versehentlichem Anschließen und Aktivieren von HVD-SCSI-Einrichtungen am gleichen SCSI-Bus an den LVD-SCSI-Einrichtungen zu hohe Signalspannungspegel auftreten und diese Einrichtungen somit zerstört werden können.

Gemäß der Erfindung, die sich auf eine Schaltung der eingangs genannten Art bezieht, wird diese Aufgabe dadurch gelöst, daß ein Komparator zum Vergleichen des auf der DIFFSENS (Difference Sense)-Leitung des LVD-SCSI-Bus herrschenden Spannungspegels mit einer dem niedrigsten charakteristischen Wert eines HVD-Spannungspegels auf der DIFFSENS-Leitung entsprechenden Referenzspannung vorgesehen ist und daß an den Ausgang des Komparators eine Überwachungslogikschaltung angeschlossen ist, deren Ausgang mit den beiden differentiellen RST-Leitungen des LVD-SCSI-Bus verbunden ist und einen SCSI-Bus-Reset auf dem LVD-SCSI-Bus auslöst, wenn das Ausgangssignal des Komparators meldet, daß der auf der DIFFSENS-Leitung auftretende Signalspannungspegel die Referenzspannung übersteigt.

Die Schutzschaltung nach der Erfindung zeichnet sich dadurch aus, daß sofort nach dem Erkennen des HVD-Signalspannungspegels auf der DIFFSENS-Leitung, also gewöhnlich eines Pegels von mehr als 2,4 Volt, von der Überwachungslogikschaltung ein SCSI-Bus-Reset auf dem LVD-SCSI-Bus ausgelöst wird.

Die DIFFSENS-Leitung ist beim symmetrischen, also einem mit differentiellen Signalen arbeitenden SCSI-Schnittstellenbus vorgesehen, um durch ein Prüfsignal kenntlich zu machen, ob eine mit unsymmetrischen, also nichtdifferentiellen Signalen arbeitende Einrichtung angeschlossen ist.

Vorteilhafte und zweckmäßige Weiterbildungen der Schaltung nach der Erfindung sind in den Unteransprüchen angegeben.

Die Dauer des durch die Schutzschaltung nach der Erfindung ausgelösten Bus-Resets wird in vorteilhafter Weise von der Dauer des entsprechenden Spannungspegels auf der DIFFSENS-Leitung abhängig gemacht und zusätzlich um eine Wartezeit verlängert, bis die stabilen Spannungspegelverhältnisse am LVD-SCSI-Bus gewährleistet sind. Dies Wartezeit ist länger bemessen als die minimale SCSI-Bus-Reset-Zeit.

Die Schutzschaltung nach der Erfindung ist in vorteilhafter Weise so ausgebildet, daß die Spannungspegel des auf dem LVD-SCSI-Bus ausgelösten Resets auf den symmetrischen RST-Leitungen einen Bereich von 0 Volt bis 3,3 Volt nicht überschreiten und die Differentialspannung zwischen dem positiven und dem negativen Teilsignal des Resets möglichst nicht kleiner als 1 Volt ist. Auf diese Weise werden vorgeschriebene Bedingungen erfüllt, um alle LVD-SCSI- und HVD-SCSI-Einrichtungen, die sich an demselben SCSI-Bus befinden, im SCSI-Reset-Zustand zu halten.

Durch das automatische Auslösen des SCSI-Resets am LVD-SCSI-Bus werden die an diesem Bus aktiven HVD-SCSI-Einrichtungen sofort gesperrt, und an den integrierten Schaltungsbausteinen (ICs) von LVD-SCSI-Einrichtungen treten nur zulässige Spannungen auf, d.h. keine solchen Spannungen, die den TERMPWR-Spannungspegel überschreiten. Ein Auftreten der Hardwarekomponenten zerstörenden "Latch-up"-Effekte in der LVD-SCSI-Umgebung ist somit gänzlich ausgeschlossen.

Bei Einsatz der Schutzschaltung nach der Erfindung ergibt sich eine sehr wirksame SCSI-Bussicherung, die unabhängig davon ist, ob sich das Rechnersystem gerade in der Anlaufphase oder in der normalen Arbeitsphase befindet.

Die Erfindung und Einzelheiten davon werden im folgenden anhand eines in zwei Figuren dargestellten Ausführungsbeispiels erläutert. Es zeigen:
FIG. 1 das Blockschaltbild einer entsprechend der Erfindung ausgebildeten Schutzschaltung, und
FIG. 2 einen Ablaufplan für die in der Schaltung nach der Erfindung enthaltenen Überwachungslogikschaltung.

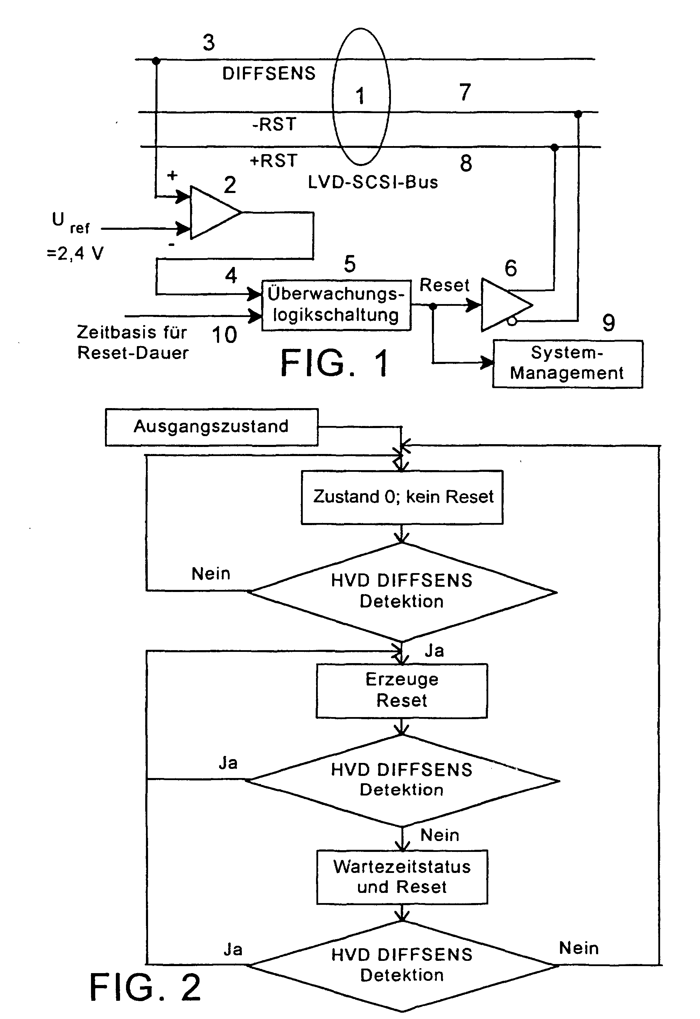

In FIG. 1 ist in Blockschaltbildform ein Ausführungsbeispiel einer in einem Rechnersystem vorgesehenen Schaltung nach der Erfindung zum Schutz von LVD(Low Voltage Differential)-SCSI(Small Computer System Interface)-Einrichtungen, z.B. Geräten oder Controllern, vor zu hohen Signalspannungen, die von an einem gleichen symmetrischen LVD-SCSI-Bus 1 angeschlossenen und aktivierten HVD-SCSI(High Voltage Differential)-Einrichtungen erzeugt werden, dargestellt.

In der Schaltung ist ein Komparator 2 zum Vergleichen des auf der DIFFSENS(Difference Sense)-Leitung 3 des LVD-SCSI-Bus 1 herrschenden Spannungspegels mit einer Referenzspannung U_{ref} vorgesehen. Die Referenzspannung U_{ref} beträgt 2,4 Volt und entspricht dem niedrigsten charakteristischen Wert eines HVD-Spannungspegels auf der DIFFSENS-Leitung 3.

An den Ausgang des Komparators 2 ist mit ihrem ersten Eingang 4 eine Überwachungslogikschaltung 5 angeschlossen, deren Ausgang mit den beiden differentiellen RST-Leitungen 7 und 8 des LVD-SCSI-Bus 1 über einen Reset-Treiberverstärker 6 (Tristate) verbunden ist.

Die Überwachungslogikschaltung 5 löst einen SCSI-Bus-Reset auf dem LVD-SCSI-Bus 1 aus, wenn das Ausgangssignal des Komparators 2 meldet, daß der auf der DIFFSENS-Leitung 3 auftretende Signalspannungspegel die Referenzspannung U_{ref} übersteigt. Das Ausgangssignal der Überwachungslogikschaltung 5 beeinflußt außerdem das System-Management 9.

Die Dauer des durch die Schutzschaltung nach FIG. 1 ausgelösten Bus-Resets ist von der Dauer des entsprechenden Spannungspegels auf der DIFFSENS-Leitung 3 abhängig und wird zusätzlich um eine Wartezeit Δt verlängert, die länger bemessen ist als die minimale SCSI-Bus-Reset-Zeit, bis stabile Spannungspegelverhältnisse am LVD-SCSI-Bus 1 gewährleistet sind. Die Zeitgrundlage für die Bus-Reset-Dauer wird der Überwachungslogikschaltung 5 an ihrem zweiten Eingang 10 eingegeben.

Die Signalspannungspegel des auf dem LVD-SCSI-Bus 1 ausgelösten Bus-Resets dürfen einen Signalspannungsbereich von 0 bis 3,3 Volt nicht überschreiten, und die Differentialspannung zwischen dem positiven und negativen Teilsignal auf den entsprechenden differentiellen RST-Leitungen 7, 8 des LVD-SCSI-Bus 1 soll nicht kleiner als 1 Volt sein.

Im folgenden wird anhand des in der FIG. 2 dargestellten logischen Ablaufplans die Arbeitsweise der in der FIG. 1 enthaltenen Überwachungslogikschaltung 5 erläutert.

Die Überwachungslogikschaltung startet sofort nach dem Einschalten, also beim Übergang vom Ausgangszustand in den Zustand 0, ohne auf das Power Good-Signal des Rechnersystems zu warten, mit ihrer Arbeit, um bereits in der Hochlaufphase des Rechnersystems HVD-Zustände am LVD-SCSI-Bus auszuschließen. Danach wartet die Überwachungslogikschaltung, bis eventuell beim Prüfsignal auf der DIFFSENS-Leitung ein HVD-Zustand auftritt, der durch einen die Referenzspannung von 2,4 Volt übersteigenden Spannungspegel auf der DIFFSENSE-Leitung gekennzeichnet ist. Dieser HVD-Zustand löst einen Bus-Reset-Zustand aus.

Dieser Bus-Reset-Zustand dauert so lange, bis die vorgegebene Wartezeit nach dem Zurückkehren in den LVD-Zustand, bei dem der Spannungspegel auf der DIFFSENSE-Leitung kleiner als 2,4 Volt ist, erreicht wird. Wenn sich der HVD-Zustand nach der abgelaufenen Wartezeit nochmals einstellt, wird der LVD-SCSI-Bus weiter im Reset-Zustand gehalten. Der Reset-Zustand wird erst weggenommen, nachdem sich die LVD-Zustände auf dem Bus längere Zeit stabilisiert haben.

## Patentansprüche

1. Schaltung Für ein Rechnersystem zum Schutz von LVD, Low Voltage Differential, -SCSI, Small Computer System Interface, -Einrichtungen, z.B. Geräten oder Controllern, vor zu hohen Signalspannungen, die von an einem gleichen symmetrischen LVD-SCSI-Bus angeschlossenen und aktivierten HVD-SCSI, High Voltage Differential)-Einrichtungen erzeugt werden, **dadurch gekennzeichnet, daß** ein Komparator (2) zum Vergleichen des auf der DIFFSENS, Difference Sense, -Leitung (3) des LVD-SCSI-Bus (1) herrschenden Spannungspegels mit einer dem niedrigsten charakteristischen Wert eines HVD-Spannungspegels auf der DIFFSENS-Leitung entsprechenden Referenzspannung (U_{ref}) vorgesehen ist und daß an den Ausgang des Komparators eine Überwachungslogikschaltung (5) angeschlossen ist, deren Ausgang mit den beiden differentiellen RST-Leitungen (7, 8) des LVD-SCSI-Bus verbunden ist und einen SCSI-Bus-Reset auf dem LVD-SCSI-Bus auslöst, wenn das Ausgangssignal des Komparators meldet, daß der auf der DIFFSENS-Leitung auftretende Signalspannungspegel die Referenzspannung übersteigt.

2. Schaltung nach Anspruch 1, **dadurch gekennzeichnet, daß** die Referenzspannung (U_{ref}) 2,4 Volt beträgt.

3. Schaltung nach Anspruch 1 oder 2, **dadurch gekennzeichnet, daß** die Dauer des durch die Überwachungslogikschaltung (5) ausgelösten SCSI-Bus-Resets zumindest so lange bemessen ist, wie das Ausgangssignal des Komparators (2) meldet, daß der auf der DIFFSENS-Leitung (3) auftretende Signalspannungspegel die Referenzspannung (U_{ref}) übersteigt.

4. Schaltung nach Anspruch 3, **dadurch gekennzeichnet, daß** die Dauer des durch die Überwachungslogikschaltung (5) ausgelösten SCSI-Bus-Resets um eine zusätzliche Wartezeit verlängert ist, die so gewählt ist, daß stabile Signalspannungsverhältnisse auf dem LVD-SCSI-Bus (1) gewährleistet sind.

5. Schaltung nach Anspruch 4, **dadurch gekennzeichnet, daß** die Überwachungslogikschaltung (5) so ausgelegt ist, daß nach Ablauf der Wartezeit noch einmal ein Bus-Reset ausgelöst wird, wenn das Ausgangssignal des Komparators (2) meldet, daß der auf der DIFFSENS-Leitung (3) auftretende Signalspannungspegel die Referenzspannung (U_{ref}) übersteigt.

6. Schaltung nach einem der vorhergehenden Ansprüche, **dadurch gekennzeichnet, daß** die Signalspannungspegel des auf dem LVD-SCSI-Bus (1) ausgelösten Resets einen Signalspannungsbereich von 0 bis 3,3 Volt nicht überschreiten.

7. Schaltung nach Anspruch 6, **dadurch gekennzeichnet, daß** die Differentialspannung zwischen dem positiven und negativen Teilsignal auf den entsprechenden differentiellen RST-Leitungen (7, 8) des LVD-SCSI-Bus (1) nicht kleiner als 1 Volt ist.

8. Schaltung nach Anspruch 7, **dadurch gekennzeichnet, daß** an den Ausgang der Überwachungslogikschaltung (5) ein Reset-Treiberverstärker (6) angeschlossen ist, dessen zwei Ausgänge mit den beiden differentiellen RST-Leitungen (7, 8) des symmetrischen LVD-SCSI-Schnittstellen-Bus (1) verbunden sind.

9. Schaltung nach einem der vorhergehenden Ansprüche, **dadurch gekennzeichnet, daß** die Überwachungslogikschaltung (5) bereits mit dem Einschalten des Rechnersystems aktiviert ist.

## Claims

1. Circuit for a computer system for protection of LVD, Low Voltage Differential, -SCSI, Small Computer System Interface, devices, for example appliances or controllers, against excessively high signal voltages which are produced by HVD-SCSI, High Voltage Differential, devices which are activated and connected to the same symmetrical LVD-SCSI bus, **characterized in that** a comparator (2) is provided for comparing the voltage level on the DIFFSENS, Difference Sense, line (3) of the LVD-SCSI bus (1) with a reference voltage (U_{ref}) which corresponds to the lowest characteristic value of an HVD voltage level on the DIFFSENS line, and **in that** the output of the comparator is connected to a monitoring logic circuit (5), whose output is connected to the two differential RST lines (7, 8) of the LVD-SCSI bus and initiates an SCSI bus reset on the LVD-SCSI bus when the output signal from the comparator signals that the signal voltage level on the DIFFSENS line is greater than the reference voltage.

2. Circuit according to Claim 1, **characterized in that** the reference voltage (U_{ref}) is 2.4 volts.

3. Circuit according to Claim 1 or 2, **characterized in that** the duration of the SCSI bus reset which is initiated by the monitoring logic circuit (5) is designed to be at least as long as the output signal from the comparator (2) signals that the signal voltage level on the DIFFSENS line (3) is greater than the reference voltage (U_{ref}).

4. Circuit according to Claim 3, **characterized in that** the duration of the SCSI bus reset which is initiated by the monitoring logic circuit (5) is lengthened by an additional waiting time, which is chosen so as to ensure stable signal voltage relationships on the LVD-SCSI bus (1).

5. Circuit according to Claim 4, **characterized in that** the monitoring logic circuit (5) is designed such that a bus reset is initiated once again once the waiting time has elapsed and when the output signal from the comparator (2) signals that the signal voltage level on the DIFFSENS line (3) is greater than the reference voltage (U_{ref}).

6. Circuit according to one of the preceding claims, **characterized in that** the signal voltage levels of the reset which is initiated on the LVD-SCSI bus (1) do not exceed a signal voltage range from 0 to 3.3 volts.

7. Circuit according to Claim 6, **characterized in that** the differential voltage between the positive signal element and the negative signal element on the corresponding differential RST lines (7, 8) of the LVD-SCSI bus (1) is not less than 1 volt.

8. Circuit according to Claim 7, **characterized in that** the output of the monitoring logic circuit (5) is connected to a reset driver amplifier (6), whose two outputs are connected to the two differential RST lines (7, 8) of the symmetrical LVD-SCSI interface bus (1) .

9. Circuit according to one of the preceding claims, **characterized in that** the monitoring logic circuit (5) is activated as soon as the computer system is switched on.

## Revendications

1. Circuit pour un système informatique en vue de la protection de dispositifs LVD, Low Voltage Differential, SCSI, Small Computer System Interface, par exemple des appareils ou des contrôleurs, contre des tensions de signal trop élevées qui sont produites par des dispositifs HVD-SCSI, High Voltage Differential, raccordés à un même bus LVD-SCSI symétrique et activés, **caractérisé par le fait qu'**un comparateur (2) est prévu pour comparer le niveau de tension régnant sur la ligne DIFFSENS, Difference Sense, (3) du bus LVD-SCSI (1) à une tension de référence (U_{ref}) correspondant à la plus basse valeur caractéristique d'un niveau de tension HVD sur la ligne DIFFSENS et que la sortie du comparateur est raccordée à un circuit logique de surveillance (5) dont la sortie est reliée aux deux lignes RST différentielles (7, 8) du bus LVD-SCSI et déclenche une remise à l'état initial de bus SCSI sur le bus LVD-SCSI si le signal de sortie du comparateur indique que le niveau de tension de signal apparaissant sur la ligne DIFFSENS dépasse la tension de référence.

2. Circuit selon la revendication 1, **caractérisé par le fait que** la tension de référence (U_{ref}) vaut 2,4 V.

3. Circuit selon la revendication 1 ou 2, **caractérisé par le fait que** la durée de la remise à l'état initial de bus SCSI déclenchée par le circuit logique de surveillance (5) est au moins aussi longue que la durée pendant laquelle le signal de sortie du comparateur (2) indique que le niveau de tension de signal apparaissant sur la ligne DIFFSENS (3) dépasse la tension de référence (U_{ref}).

4. Circuit selon la revendication 3, **caractérisé par le fait que** la durée de la remise à l'état initial de bus SCSI déclenchée par le circuit logique de surveillance (5) est prolongée d'un temps d'attente supplémentaire qui est choisi de telle sorte que des rapports de tension de signal stables sont garantis sur le bus LVD-SCSI (1).

5. Circuit selon la revendication 4, **caractérisé par le fait que** le circuit logique de surveillance (5) est conçu de telle sorte que, après l'expiration du temps d'attente, une remise à l'état initial de bus est encore une fois déclenchée si le signal de sortie du comparateur (2) indique que le niveau de tension de signal apparaissant sur la ligne DIFFSENS (3) dépasse la tension de référence (U_{ref}).

6. Circuit selon l'une des revendications précédentes, **caractérisé par le fait que** les niveaux de tension de signal de la remise à l'état initial déclenchée sur le bus LVD-SCSI (1) ne dépassent pas une plage de tension de signal allant de 0 à 3,3 V.

7. Circuit selon la revendication 6, **caractérisé par le fait que** la tension différentielle entre le signal partiel positif et le signal partiel négatif sur les lignes RST différentielles (7, 8) correspondantes du bus LVD-SCSI (1) n'est pas inférieure à 1 V.

8. Circuit selon la revendication 7, **caractérisé par le fait que** la sortie du circuit logique de surveillance (5) est raccordée à un amplificateur d'attaque de remise à l'état initial (6) dont les deux sorties sont reliées aux deux lignes RST différentielles (7, 8) du bus d'interface LVD-SCSI symétrique (1).

9. Circuit selon l'une des revendications précédentes, **caractérisé par le fait que** le circuit logique de surveillance (5) est activé dès le branchement du système informatique.
